# EUROPEAN PATENT APPLICATION

(11) **EP 2 450 312 A1**
(43) Date of publication of application: **09.05.2012**
(21) Application number: 10189904.5
(22) Date of filing: 03.11.2010
(51) Int. Cl.: C01G 41/00, C01G 41/02, C22B 1/02, C22B 7/00, C22B 34/36

(54) **Recovery of tungsten from waste material by ammonium leaching**

(71) Applicant: Montanuniversität Leoben, 8700 Leoben (AT)
(72) Inventor: Luidold, Stefan, 8700 Leoben (AT); Angerer, Thomas, 8700 Leoben (AT); Antrekowitsch, Helmut, 8700 Leoben (AT)
(74) Representative: Dilg, Haeusler, Schindelmann Patentanwaltsgesellschaft mbH

(57) **Abstract**

A method of recycling tungsten within a waste material comprises roasting the waste material in an oxidizing atmosphere for converting the tungsten and/or tungsten carbide into tungsten oxide, directly after the roasting, leaching the roasted waste material for separating tungsten components from remaining components, wherein the tungsten components are leached in an alcaline ammonia solution so that the tungsten oxide is selectively dissolved, and separating remaining solid components of the leached roasted waste material from the dissolved tungsten oxide.

## Description

### Field of the invention

The invention relates to a method of recycling tungsten within a waste material.

### Background of the invention

Tungsten-soft scrap is a waste that accrues by the production of hard metal tools. The land filling of this valuable material causes serious ecological and economic problems. Thus, it is required to recover tungsten with appropriate techniques, for instance by leaching.

For recycling of tungsten from waste material or residual material comprising impurified tungsten, methods are known which are oriented on the production of tungsten oxide based on ore. Basically, such a process includes an alkaline roasting in order to convert the metals and carbides into corresponding oxides. A sodium tungstate solution results from a subsequent leaching, wherein multiple cleaning steps are performed. Subsequently, the tungsten is selectively extracted into an organic phase by a solvent extraction. Subsequently, a re-extraction in form of an ammonium tungstate solution is performed. From the latter, tungsten oxide is recovered by crystallization and calcination. The tungsten oxide may be transferred into tungsten or tungsten carbide subsequently.

EP 0,744,380 discloses that tungsten carbide and/or tungsten can be recycled by oxidizing the tungsten composition at a temperature greater than 700 WC to form a water insoluble tungsten trioxide. This is then reduced to form tungsten dioxide. The tungsten dioxide is subjected to a low temperature oxidation which forms monoclinic tungsten trioxide. The monoclinic tungsten trioxide is then dissolved in ammonia to form ammonium tungstate. If present, the binder metal such as cobalt is converted into the soluble ammine complex. This can be spray dried and carburized to form tungsten carbide. If the form composition includes cobalt or other binder metal, the ratio of cobalt to tungsten can be adjusted by adding cobalt salts or ammonium metatungstate to the aqueous solution prior to spray drying to form a precursor composition. This is uniquely suitable for forming a cobalt tungsten carbide composition.

However, conventional recycling of tungsten suffers from a high complexity of the process.

### Object and summary of the invention

It is an object of the invention to enable tungsten recycling with a simple processing and a high rate of yield.

In order to achieve the object defined above, a method of recycling tungsten within a waste material according to the independent claim is provided.

According to an exemplary embodiment of the invention, a method of recycling tungsten within a waste material is provided. The method comprises (a particularly continuous or uninterrupted, i.e. without any intermediate method step between) roasting the waste material in an oxidizing atmosphere for at least partially converting tungsten compounds of the waste material (such as metallic tungsten and/or tungsten carbide and/or other compounds comprising tungsten) into tungsten oxide, and, directly after the roasting (particularly without any intermediate method step between), leaching the roasted waste material for separating tungsten components from remaining components. The tungsten components are leached (this may or may not be the before mentioned leaching process) in an alkaline ammonia solution so that the tungsten oxide is selectively dissolved. The method further comprises separating remaining solid components of the leached roasted waste material from the dissolved tungsten oxide.

The term "waste material" may particularly denote residual materials which form part of a device which has a defined functionality and has been used to provide this functionality over its entire lifetime. After expiry of the lifetime of the device, it cannot be used with sufficient performance any longer. At this stage, the material of the device is considered as a waste material, and can be made subject of a recycling process to extract at least a part of the constituents of the waste material for further use. It also denotes residual materials (such as junk, byproduct, minor product) that originate during or from the production or processing of devices or parts of devices.

The term "leaching" may particularly denote a process which involves the use of solutions, particularly aqueous solutions, containing an agent for lixiviating (or a lixiviant) to be brought into contact with a waste material containing a metal or oxide. The lixiviant in solution may be acidic or basic (alkaline) in nature. The type and concentration of the lixiviant may be controlled to allow some degree of selectivity for the metal or metals respectively metal oxide or metal oxides that are to be recovered. In the leaching process, oxidation potential, temperature, solid/liquid ratio, concentration and pH of the solution are adjustable parameters, and may be manipulated to promote dissolution of the desired metal component into the liquid phase.

The term "roasting" may particularly denote a metallurgical process involving gas-solids reactions at elevated temperatures. In an embodiment, the temperature never falls below 400°C during the entire roasting procedure. The term "oxidizing atmosphere" may particularly denote a gaseous atmosphere (such as air) in which an oxidation reaction occurs, particularly the oxidation of solids. Such an oxidizing atmosphere may take place at an elevated temperature. In an embodiment, the oxidizing atmosphere is maintained persistently throughout the entire roasting procedure.

The term "metal" may particularly denote an element, compound, or alloy characterized by high electrical conductivity. In a metal, atoms readily lose electrons to form positive ions (cations). Those ions are surrounded by delocalized electrons, which are responsible for the conductivity. Metals include groupings as transition metals, and rare earth metals.

The term "alcaline solution" may particularly denote a liquid having dissolved therein an alkali, i.e. a basic, ionic salt of an alkali metal or alkaline earth metal element. Hence, an alcaline solution can be a solution of a soluble base and has a ph-I greater than 7.

The term "ammonia solution" may particularly denote a solution having a solvent (such as an aqueous solvent) to which ammonia is added. Ammonia is a compound of nitrogen and hydrogen with the formula NH₃. An ammonia solution may comprise or consist of ammonium hydroxide, i.e. a solution of NH₃ in water. A characteristic property of ammonia is its basicity so that it forms an alkaline solution with water, i.e. having a pH value above 7.

The term "selectively dissolving the tungsten oxide" may particularly denote that only or basically only tungsten compounds are dissolved in the solution due to a proper adjustment of the pH value and other parameters of the solution, whereas other metal compounds remain in a solid state. This forms a basis for the separation of tungsten compounds from other components.

The term "dissolved tungsten oxide" may particularly denote compounds comprising tungsten which form part of the liquid solution, i.e. are not in a solid state.

According to an exemplary embodiment of the invention, a process for at least partially recycling tungsten from impurified tungsten scrap is provided. A gist of such a process is the combination of a continuous oxidative roasting procedure directly followed by a selective leaching of the resulting metal oxides to separate different metal components by a solid/liquid separation. Separation of specific tungsten components from other components (such as components comprising other metals and/or other tungsten components) may be performed by producing an ammonia solution. In such an ammonia solution, the tungsten components can be brought in the liquid phase, whereas other components are in a solid phase. By applying only one (or a single-stage) roasting procedure at moderate temperatures it is possible to significantly accelerate the recycling process as compared to conventional approaches which apply complicated multiple-step roasting procedures interrupted by reduction processes.

More specifically, an embodiment of the invention provides a processing concept for recycling of tungsten from impurified tungsten comprising waste material. In a first process step, an oxidizing roasting of the residual material may be performed in order to remove adhering water and hydrocarbons and to convert the contained metals and carbides into corresponding oxides. In a subsequent ammonium leaching, a preferably complete and selective solution of the tungsten oxide results in the formation of an ammonium tungstate solution (such as ammonium paratungstate and/or metatungstate solution). An insoluble residue may be separated for instance by means of filtration. A further leaching process may dissolve binder metal oxides, wherein the remaining slurry contains enriched elements such as Ta, Nb, Ti, etc. which can be recycled by corresponding method steps as well. Hence, the recovery of corresponding binder metals can be performed by suitable processing steps. Depending on an achieved degree of purity, the ammonium paratungstate solution obtained from the ammonia leaching can be purified (for instance using an ion exchanger, etc.) before the ammonium tungstate is crystallized, for instance by concentrating it (evaporation of water and ammonia). From the latter material, it is possible to obtain tungsten oxide by calcination, which may serve as a starting material for the production of tungsten and tungsten carbide.

In the described procedure, the ammonia leaching can be performed directly after the roasting.

However, in a variant to the described concept, the leaching of the binder metal (or auxiliary metal) oxides can be performed directly after the oxidative roasting. A filtration subsequently separates the binder metal comprising solution from the solid in order to subsequently selectively dissolve tungsten oxide by means of an ammonia leaching procedure. The resulting ammonia tungstate solution can again be processed to produce tungsten oxide wherein the remaining slurry of the ammonia leaching can also allow to recover elements such as Ta, Nb, Ti, etc. by additional processing steps.

By the use of an ammonia solution for leaching after the oxidative roasting of the residuals instead of an alkaline roasting and leaching, a time consuming and expensive solvent extraction procedure may be omitted. If the solution obtained from the ammonia leaching still contains too high contents of impurities, a purification procedure such as the use of ion exchangers may be performed. This is however still advantageous as compared to solvent extraction, since during the solvent extraction the complete tungsten material has to be extracted and recycled, whereas according to exemplary embodiments of the invention only very small amounts of impurities need to be separated from the solution for instance by means of ion exchanger resins. Thus, significantly smaller and cheaper aggregates are sufficient according to exemplary embodiments of the invention.

However, a refining may also be obtained by concentrating the tungstate solution not completely but only to a certain amount for crystallization to ammonia tungstate so that in such a scenario it is possible that impurities remain in the remaining solution partially or completely.

According to an exemplary embodiment, it is further possible to recover, apart from the tungsten and the included binder metals, optionally further metals such as Ta, Nb, Ti, since they may be present in enriched form in the remaining residue.

### Detailed description of embodiments of the invention

In the following, further exemplary embodiments of the method will be explained.

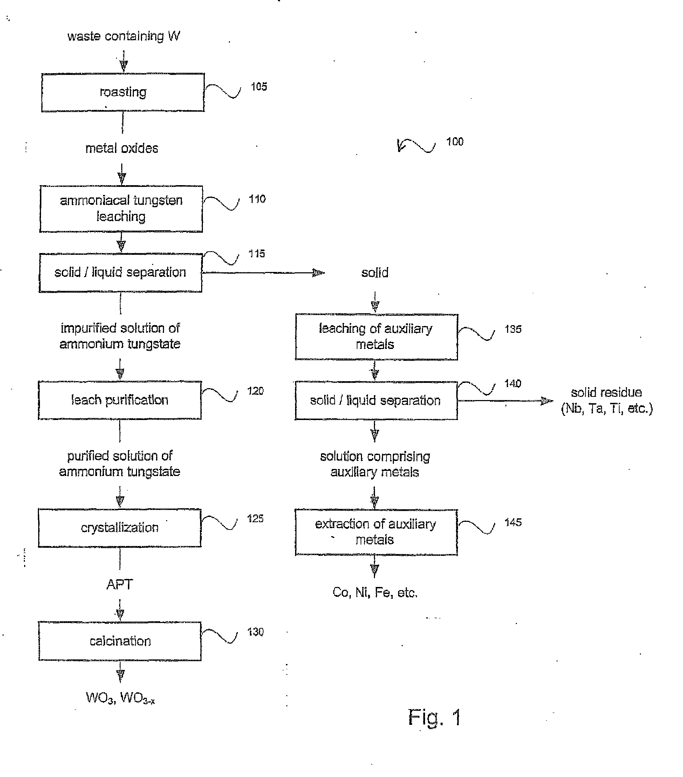

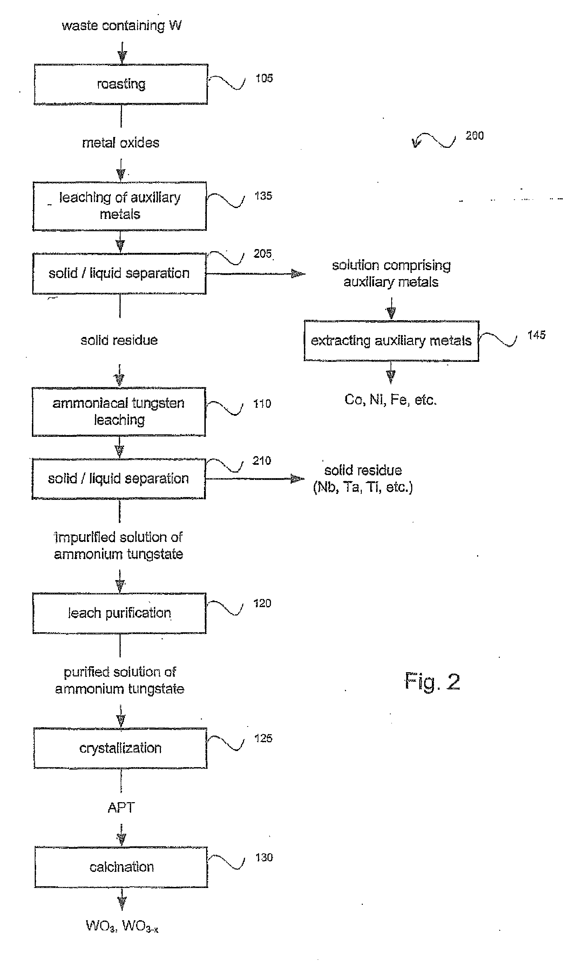

In one embodiment, the leaching procedure directly after the roasting is the leaching of the tungsten components in the alcaline ammonia solution (see for instance Fig. 1). However, the leaching procedure directly after the roasting may alternatively differ from the leaching of the tungsten components in the alcaline ammonia solution (see for instance Fig. 2). In the latter case, the leaching procedure directly after the roasting may be performed so that selectively at least one auxiliary metal (i.e. not the tungsten) is dissolved.

In an embodiment, the waste material may be roasted at a temperature in a range between about 400°C and about 1000°C, particularly in a range between about 500°C and about 800°C. If the temperature becomes too small, the reaction rate and the kinetics of the oxidative roasting becomes too slow. If however the temperature becomes too large, the material may tend to start sintering which is undesired in view of the further processing. Moreover, it is assumed that at too high temperatures insoluble tungsten compounds are formed which reduce the yield of tungsten from the recycling procedure.

As a basis for the oxidative roasting, the waste material may be provided in a powder form which ensures a high reaction rate. However, it is also possible to provide the waste material as hard metal pieces, since the oxidative roasting may convert even such hard metal pieces into powder. Alternatively, the waste material may also be provided as abrasive slurry or grinding debris.

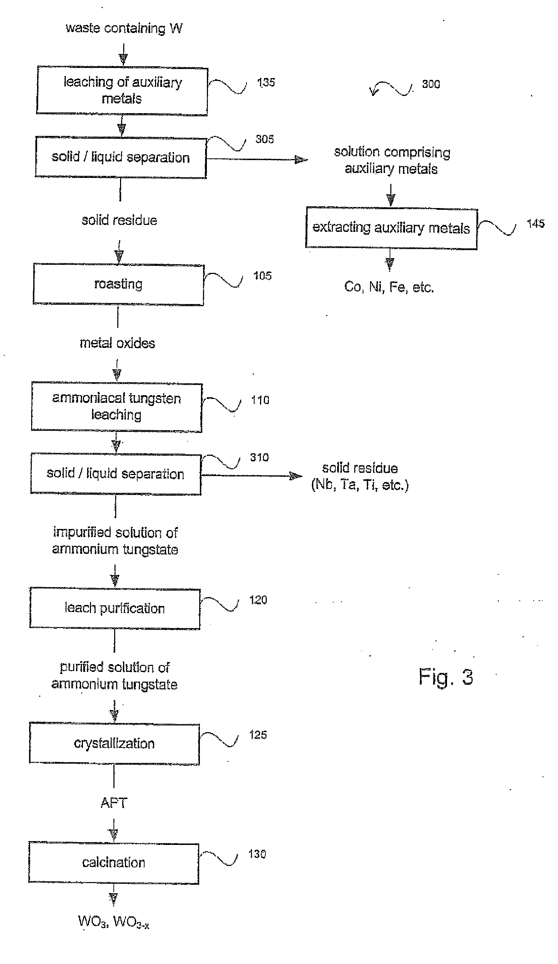

In an embodiment, the method further comprises leaching the waste material before the roasting so that selectively at least one auxiliary metal is dissolved (compare Fig. 3). Due to the extremely simple and time efficient continuous single-stage roasting procedure at moderate temperatures it may happen that the yield of recycled tungsten may be below 100%. Without wishing to be bound to a specific theory, it is presently believed that this is due to the formation of tungsten oxides at an oxidation level which result in tungsten complexes being poorly soluble. However, this slight reduction of yield can be overcompensated in terms of productivity by the simplified process. However, if a further increase of the yield of recycled tungsten is desired, an embodiment of the invention adds a further leaching procedure prior to the roasting. In this further leaching procedure, auxiliary metals such as Co may be removed from the waste materials at least partially by selectively leaching. An appropriate leaching solution may be acidic, for instance a solution of sulphuric acid, nitric acid, or an organic acid. The pH value of such a leaching solution may be smaller than 5, particularly may be in a range between 0.5 and 3.

In an embodiment, the oxidation level of the tungsten oxide to be leached is defined exclusively by the oxidative roasting of the waste material including metallic tungsten, tungsten carbide or other tungsten compounds. Particularly, no intermediate reduction procedures are needed to bring the tungsten components to a certain oxidation level.

In an embodiment, the waste material may be roasted in a furnace, particularly in a chamber furnace, a pusher-type kiln or a rotary furnace. However, these furnaces are only examples, and other furnaces or means of heating the waste material in an oxidizing atmosphere are possible as well. The waste material may be simply inserted into a furnace which is heated to a temperature in the given ranges. An oxygen atmosphere such as an air atmosphere may be maintained continuously during the entire roasting procedure.

In an embodiment, the ammonia solution (which may particularly be an aqueous solution) has an ammonia component in a range between about 0.5 mass percentage and about 25 mass percentage, particularly in a range between about 2 mass percentage and about 6 mass percentage. It has turned out that the given concentrations of aqueous ammonia solutions have turned out to be highly advantageous for the selective dissolution of tungsten. With regard to the given ranges, if the concentration of the ammonia solution falls below the lower level, the leaching rate may become too low and the time consumption for the dissolution of the tungsten will become too large. On the other hand, if the ammonia concentration becomes too high and significantly exceeds the given threshold, the solubility limit is reached so that a further increase of the concentration of the ammonia will not have any positive effect.

In an embodiment, leaching parameters may be adjusted so that dissolution of impurities are below about 500 ppm, particularly below about 200 ppm. Two or more leaching parameters of the group consisting of a stirring speed indicative of a stirring velocity of the leaching solution during processing, the total leach volume, an ammonia concentration in weight %, a liquid to solid ratio (i.e. a ratio between the volume of the leaching solution and the mass of the leached waste material), a leaching temperature, and a leaching time may be considered. One leaching parameter which can be adjusted is the stirring of the solution during the ammonia leaching. This stirring should be performed with such a velocity that the solid material within the solution is prevented from sedimentation to the ground.

In an embodiment, a mass to volume ratio between solid (roasted scrap) and liquid (leaching solution) during leaching may be in a range between about 1/100 g/ml and about 1/3 g/ml, particularly in a range between about 1/15 g/ml and about 7./S g/ml. Hence, in the leaching solution having the material to be leached therein, the amount of liquid may be larger than the amount of solid.

In an embodiment, a temperature during leaching may be in a range between about 20°C and about 180°C, particularly in a range between about 20°C and about 70°C. A lower limit of the temperature range, i.e. a temperature around room temperature, is necessary, because otherwise the chemical reaction becomes too slow. The upper level reflects the technical fact that at higher temperature undesired evaporation effects may occur. Thus, if an open container shall be used for the leaching, the given upper values allow to keep the evaporation at an acceptable level. However, these temperatures may be further increased when a container with a lid is used, for instance a pressure container.

In an embodiment, a duration of the leaching may be in a range between about 1 minute and about 6 hours. Particularly for applications on an industrial scale, a high speed and therefore a high throughput has to be balanced with a sufficiently large dissolution of the tungsten material.

In an embodiment, a separation between solid and liquid components may comprise filtration or centrifugation. Filtration may be a preferred method, since it can reliably separate different components with reasonable effort.

In an embodiment, the method further comprises comminuting the waste material before the roasting, particularly by grinding, shearing or shredding. The waste material may be comminuted to particles or granulates of a size in a range between 100 pm to 10 cm, particularly in a range between 1 mm to 2 cm. For instance, a hard bulk component as a waste material may be grinded to promote attack of oxygen at high temperatures during the oxidative roasting. It is also possible to abrase the waste material, for instance by converting it into a powder.

In an embodiment, the method may further comprise purifying the separated dissolved tungsten oxide, particularly by ion exchange. However, other purification methods are possible as well. In contrast to conventional tungsten recycling concepts, the purification efforts may be significantly lowered according to exemplary embodiments of the invention, since for instance removal of large sodium amounts by a solvent extraction is dispensable.

In an embodiment, the method may further comprise evaporating liquid components of the separated dissolved tungsten oxide for crystallization. Thus, based on a solution having dissolved therein tungsten ions, evaporation of liquid components such as water and ammonia may promote a crystallization of tungsten components so that particularly ammonia paratungstate can be obtained.

In an embodiment, the method may further comprise calcinating the crystallized material to thereby obtain tungsten oxide. Calcination may be denoted as a thermal treatment process applied to solid materials in order to bring about a thermal decomposition, phase transition and/or removal of a volatile fraction. The calcination process normally takes place at temperatures below the melting point of the product materials. Calcination is to be distinguished from roasting, in which more complex gas-solid reactions take place between the furnace atmosphere and the solids. Such a calcination may be realized by heating the ammonia paratungstate in crystallized form in an atmosphere such as an air atmosphere or even an inert atmosphere (for instance argon, nitrogen). Recovered ammonia paratungstate or alternatively tungsten oxide can be used as a trade product or as a basis for production of pure tungsten.

In an embodiment, the method may further comprise recycling at least one further metal from the separated solid components. In an embodiment, the residue material from the described method can be used as a basis for recycling further components such as cobalt, nickel or iron. Thus, the waste material can be recycled to a large extent.

Still referring to the previously described embodiment, the recycling of the at least one further metal may comprise leaching the separated solid components (obtained after the ammonia tungsten leaching) so that selectively the at least one further metal is dissolved, and separating remaining solid components of the leached separated solid components from the dissolved at least one further metal (compare for instance Fig. 1). Such a leaching may be performed with the solid residue obtained after the solid/liquid separation following the ammonia tungsten leaching. An appropriate leaching solution may be acidic, for instance a solution of sulphuric acid, nitric acid, or an organic acid. The pH value of such a leaching solution may be smaller than 5, particularly may be in a range between 0.5 and 3.

In an alternative embodiment, the leaching directly after the roasting differs from the leaching of the tungsten components in the alcaline ammonia solution and is performed so that selectively at least one auxiliary metal is dissolved (compare for instance Fig. 2). The method may then further comprise recycling at least one further metal from a liquid solution in which the at least one auxiliary metal is dissolved. Thus, directly after the roasting, the auxiliary metals may be dissolved before the tungsten is dissolved.

Still referring to the previously described embodiment, the recycling of the at least one further metal may comprise leaching the roasted waste material so that selectively the at least one further metal is dissolved, and separating remaining solid components of the leached roasted waste material from the dissolved at least one further metal. Therefore, in this embodiment, the leaching of the auxiliary metals directly follows the roasting and is performed before the actual ammonia tungsten leaching. In other words, the auxiliary metals are brought into solution in this embodiment, whereas the solid residue after the leaching of the auxiliary metals still contains tungsten.

### Brief description of the drawings

The invention will be described in more detail hereinafter with reference to examples of embodiment but to which the invention is not limited:
Fig. 1 is a block diagram schematically illustrating a method of recycling tungsten in a waste material according to an exemplary embodiment of the invention.
Fig. 2 is a block diagram schematically illustrating a method of recycling tungsten in a waste material according to another exemplary embodiment of the invention.
Fig. 3 is a block diagram schematically illustrating a method of recycling tungsten in a waste material according to a further exemplary embodiment of the invention,
Fig. 4A shows a scanning electron microscope (SEM) image of the fine porosity of recycled tungsten oxide, and Fig. 4B shows an SEM image showing the rectangular shape of the crystalline particles.
Fig. 5 shows a table indicating leaching parameters designed in accordance with a computer-assisted leaching scheme according to an exemplary embodiment of the invention (using MODDE 7® software).
Fig. 6 is a diagram illustrating a dependency between a leaching time and a dissolved mass of tungsten oxide as obtained during some of the described experiments.

### Detailed description of the drawings

The illustrations in the drawings are schematically. In different drawings similar or identical elements are provided with the same reference signs.

According to an exemplary embodiment, tungsten is recycled from waste material using a combination of an oxidative roasting of the waste material straightly followed by a leaching procedure. By an ammonia alkaline leaching, tungsten components may be selectively brought in solution, whereas other non-tungsten components remain in the solid phase. Hence, according to an exemplary embodiment of the invention, tungsten is at least partially recycled based on scrap including an impurified tungsten component, wherein ammonia alkaline leaching of the oxidized waste material is performed in order to directly obtain an ammonium tungstate solution. As compared to an alkaline processing (roasting with sodium salts, leaching with sodium hydroxide solution), a process according to an exemplary embodiment of the invention allows to avoid a highly complex solvent extraction or alternative process steps for its conversion into an ammonium paratungstate solution.

**Fig. 1** shows a flow-chart 100 indicating processes to be carried out during a method of recycling tungsten within a waste material according to an exemplary embodiment of the invention.

As indicated in Fig. 1, waste material comprising tungsten is, in a block 105, roasted in an oxidizing atmosphere for converting the tungsten, tungsten carbide or other tungsten compounds into tungsten oxide. This oxidizing roasting in a first process step also serves to remove adhering water or carbon hydrides at least partially and to convert the contained metals and carbides into corresponding oxides.

Subsequently, the roasted waste material is leached in an alkaline ammonia solution so that selectively the tungsten oxide is dissolved. This is indicated schematically in a block 110 showing an ammonia leaching process in order to preferably completely and selectively dissolve the tungsten oxide for the formation of an ammonium paratungstate solution.

As can be taken from a subsequent block 115 in Fig. 1, the liquid ammonium paratungstate solution is separated from an insoluble residue in a solid phase by filtration or an equivalent method. In other words, remaining solid components of the leached roasted waste materials are separated from the dissolved tungsten oxide.

Consequently, a solution of ammonium tungstate is obtained which may still contain some impurities. Optionally, to improve purity, the separated dissolved tungsten oxide may be purified for instance by ion exchange in a block 120. Hence, depending on an achieved degree of purity, the ammonium tungstate solution can be cleaned by an ion exchanger or other process steps.

When a purified solution of ammonium tungstate is obtained, as indicated in a block 125 of Fig. 1, the method may continue with evaporating potentially remaining liquid components of the separated dissolved tungsten oxide for crystallization thereof. Therefore, by evaporation of water and the like, the ammonia paratungstate crystallizes.

As indicated in a block 130, the crystallized material is calcinated to thereby obtain tungsten oxide. Tungsten oxide may be used as a starting material for the manufacture of tungsten and tungsten carbide, as known by those skilled in the art.

Coming back to the solid component obtained during the solid/liquid separation according to block 115, a block 135 indicates that the separated solid components can be leached for dissolving one or more auxiliary metals. In other words, the further leaching procedure according to block 135 dissolves metal components comprising Co, Ni, Fe, etc. whereas elements such as Ta, Nb, Ti, etc. are enriched in the solid residue and can be separated by a further filtration or solid/liquid separation according to block 140. Hence, the corresponding solid residue may be processed so as to recycle Nb, Ta, Ti, etc.

Binder metals can be recovered from the remaining solution comprising auxiliary metals as obtained from the solid/liquid separation procedure according to block 140. As can be taken from block 145, the auxiliary metals can be extracted by a corresponding procedure so that also Co, Ni, Fe, etc. can be recycled.

**Fig. 2** shows a flow-chart 200 illustrating a method of recycling tungsten within a waste material according to another exemplary embodiment of the invention.

As can be taken from Fig. 2, many of the processes are similar or identical to the first embodiment. However, the first solid/liquid separation indicated by a block 205 separates a solid residue from a solution comprising dissolved auxiliary metals, wherein in this case the solid residue also comprises the tungsten components. Furthermore, a second solid/liquid separation, as indicated by a block 210, is performed after an ammonia tungsten leaching (compare block 110) so as to separate solid residues comprising components such as Nb, Ta, Ti, etc. from tungsten.

Hence, in the embodiment of Fig. 2, the leaching of the binder metal oxides as indicated in the block 135 is performed directly after the oxidizing roasting, as indicated by block 105. The solid/liquid separation according to block 205 then separates the solution comprising solubilized binder metals from a solid from which, in a subsequent ammonia base leaching (compare block 110), selectively the tungsten oxide is dissolved. The ammonia tungstate solution generated by this procedure can then, after separating of the insoluble residue (compare solid/liquid separation block 210), be converted into tungsten oxide in blocks 120, 125, 130, as described above referring to Fig. 1.

The slurry forming the residue of the ammonia leaching according to block li(3 can then comprise elements such as Ta, Nb, Ti and can be recycled by additional process steps.

It is further possible to recycle the respective metals from the solution comprising binder metals, compare block 145.

**Fig. 3** shows a flow-chart 300 illustrating a method of recycling tungsten within a waste material according to still another exemplary embodiment of the invention.

The embodiment of Fig. 3 differs from the embodiment in Fig. 1 in that, prior to the roasting (block 105), the waste comprising tungsten is made subject of a leaching procedure (block 135) for leaching of auxiliary metals. After a subsequent solid/liquid separation (block 305), the solid residue is roasted (block 105). After a subsequent ammoniacal tungsten leaching (block 110), a solid/liquid separation (block 310) is performed. The remaining tungsten recovery blocks are as in Fig. 1. A solution obtained in block 305 is further processed for extraction of auxiliary metals (block 145).

In the following, some detailed examples for the processing of waste materials according to embodiments of the invention will be explained:

### Example 1

A synthetic mixture of 91,3% WC and 8,7% Co has been roasted for 10 hours at a temperature of 600°C. The oxidized material has been leached after cooling for 8 hours at 30°C in diluted ammonia hydroxide solution (20 ml NH₄0H solution, 25%, and 15 g suspended solid, with H₂O filled up to 250 mi). After subsequent separation of the insoluble residue by means of filtration, the solution has been reduced or concentrated by evaporation at a temperature of 80°C for 24 hours. Then, the formed ammonium paratungstate has been calcinated to form tungsten oxide (W0₃) at a temperature of 600°C for 24 hours. As a result, 52% of the tungsten included in the synthetic mixture has been recycled in the form of tungsten oxide with the following impurity contents: 110 ppm Co, < 10 ppm Ti, 10 ppm Al, 130 ppm Si, and 20 ppm Cr.

### Example 2

In this example, 15 g pure WC has been treated in the same way as in Example 1, wherein 61% of the tungsten has been recycled as tungsten oxide with the following contents of impurities: 30 ppm Co, < 10 ppm Ti, < 10 ppm Al, 120 ppm Si, 35 ppm Cr.

### Example 3

15 g of a synthetic mixture of 76,9% UVC and 7,7% Al₂O₃, 7_{/}7% Si0₂ and 7,7% Cr₂0₃ have been treated as in Example 1. The resulting tungsten oxide with a tungsten yield of f4% had the following contents of impurities: < 10 ppm Co, < 10 ppm Ti, 430 ppm Al, 200 ppm Si, 30 ppm Cr.

### Example 4

A synthetic mixture of 86 % W0₃, 8 % Si0₂, 1.5 % Ta₂0₅, i.5 % TiO₂, 1 °/a Al₂O₃ and 1 Nb₂O₅ has been roasted for 24 hours at a temperature of 600 °C. The roasted material has been leached after cooling for 1 min at 70°C in diluted ammonia hydroxide solution (60 ml NH₄0H solution, 25%, and 58.14 g suspended solid, with H₂O filled up to 250 ml). After subsequent separation of the insoluble residue by means of filtration, the solution has been reduced or concentrated by evaporation at a temperature of 80 °C for 24 hours. Then, the formed ammonium paratungstate has been calcinated to form tungsten oxide (W0₃) at a temperature of 480°C for 24 hours. As a result, 82 °/o of the tungsten included in the synthetic mixture has been recycled in the form of tungsten oxide with the following impurity contents: 20 ppm Si, 35 ppm P,I, < 10 ppm Ti, < 10 ppm Ta, < 10 ppm Nb.

### Example 5

In this example, the same synthetic mixture has been treated in the same way as in Example 4, only the leaching in diluted ammonia hydroxide solution was extended to 10 min, herein 93 % of the tungsten has been recycled as tungsten oxide with the following contents of impurities: 20 ppm Si, 25 ppm Al, < 10 ppm Ti, < 10 ppm Ta, < 10 ppm Nb.

For tungsten recycling from scrap, an ammoniacal leaching process for oxidized tungsten-soft scrap is disclosed Tungsten-soft scrap is a valuable waste material generated by conditioning of component parts (green body before or raw part after sintering) in the production of hard metal tools, etc. The incidental sludge is a mixture of various carbides, binder metals, metal chips and oil-water-emulsions (with additives). For the recycling of the sludge, the emulsion can be separated from the solid phase as far as possible. The content of hydrocarbons complicates a land filling of the sludge. Furthermore, a reprocessing is economically advantageous due to the high contents of valuable metals and carbides.

Tungsten carbide forms, with a content of in many cases 60 % to 97 %, the main part of dry pure tungsten-soft scraps. Other carbides like TaC, TiC, NbC, VC, etc. have contents up to 25 %. The balance is primarily cobalt, but the waste material also has in many cases 3 % to 30 % nickel and iron.

A direct leaching of oxidized scrap by ammoniacal leach abbreviates the procedural method of ammonium paratungstate (APT) winning. Afterwards the tungsten-ion charged leach gets purified by appropriate techniques and crystallize out as APT by evaporation of the liquid.

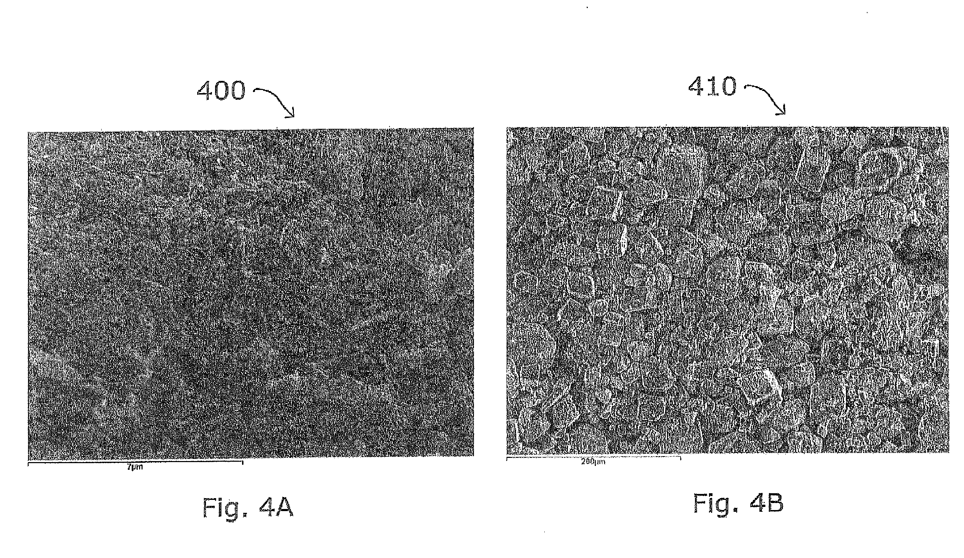

**Fig. 4A** shows a scanning electron microscope (SEM) image 400 of the fine porosity of recycled tungsten oxide. **Fig. 4B** shows an SEM image 410 showing the rectangular shape of the crystalline particles. The calcination product exhibits a distinctive porosity, see Fig. 4A. In Fig. 4B it can be seen that the calcinated WO₃ is basically rectangular.

To assembly the ammoniacal leach, distilled water and an appointed amount of a 25 wt -% NH₃ solution (Carl Roth GmbH + Co. 4CG; product number: 6774.2; CAS number: 1336-21-6) were mixed. For this purpose the ammonia concentration is adjusted between 2 wt-% NH₃ and 6 wt-% NH₃.

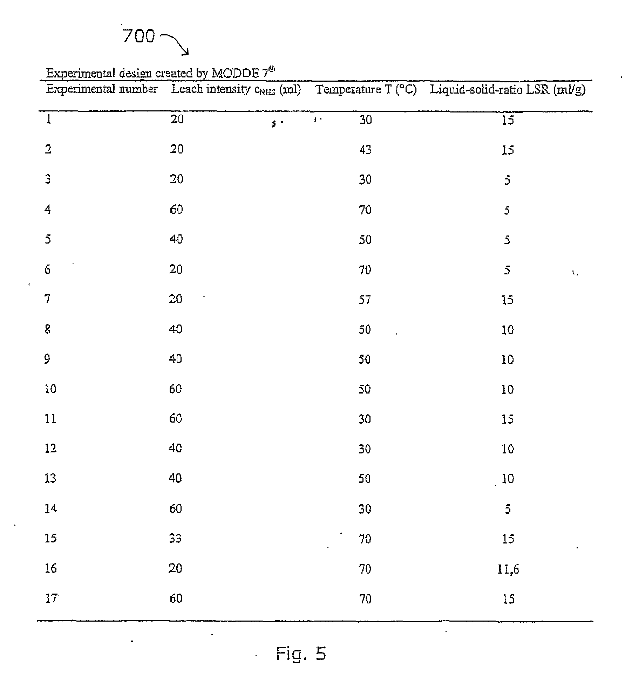

**Fig. 5** illustrates a table 700 showing an experimental design created with MODDE 7®.

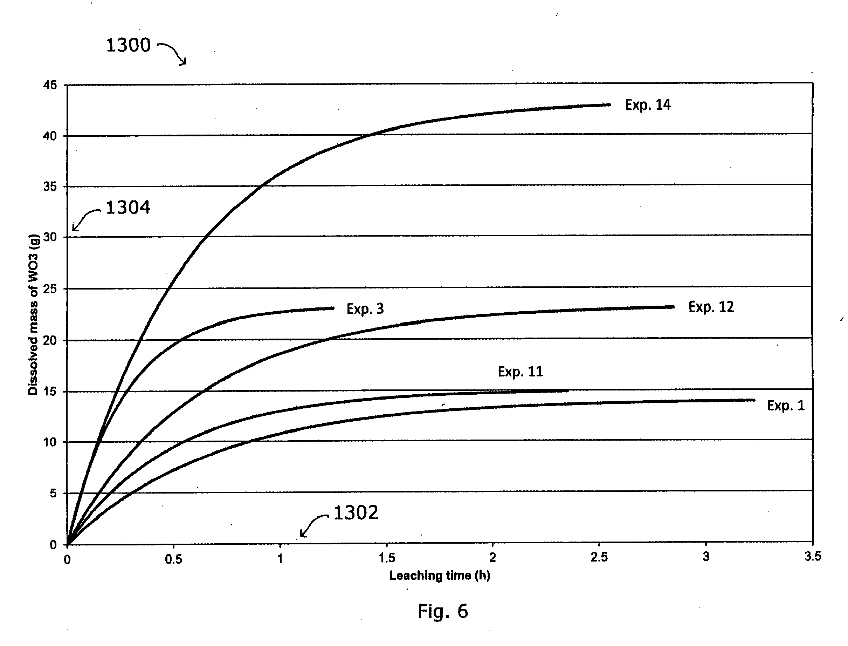

**Fig. 6** shows a diagram 1300 having an abscissa 1302 along which a leaching time is plotted in hours. Along an ordinate 1304, dissolved mass of tungsten oxide is plotted in grams. The leaching curves of experiments 1, 3, 11, 12 and 14 are shown in diagram 1300. The presentment of the dissolved WO₃ ends in these graphs at a value of 99 % solubility (0.99 a₁).

In the first instance it is necessary to limit the impurities already at the leaching process to produce pure ammonium paratungstate ATP. By adequate adjusted parameters a dissolution of the accompanying elements (grinding material of the machining, other carbides in the hard metal mixture) in the tungsten soft scrap can be inhibited.

An advantageous process concept for the recovery of tungsten from tungsten soft scrap works at the beginning with an oxidation process in a rotary furnace to transform the carbides into soluble oxides followed by a leaching of the oxidized binder metal. Downstream the optimized discontinuous ammoniacal leaching process in a stirrer vessel dissolves the tungsten(VI) oxide from the scrap without significant impurities. Due to the well adjusted ammoniacal leaching the following leach purification will be relieved. The evaporation of the leach in a vaporizer and the calcination of the produced APT to tungsten yellow oxide at temperatures over 450°C by adequate aggregates are the subsequent steps of the concept.

The recycling products are a raw material for the production of metallic tungsten or carbide, the binder metals (after a precipitation) and by further processing of the residue some other valuable metals.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware, The mere fact that certain measures are recited in mutually different dependent claims does not indicate that a combination of these measures cannot be used to advantage.

## Claims

1. A method of recycling tungsten within a waste material, the method comprising:
roasting the waste material in an oxidizing atmosphere for converting tungsten compounds of the waste material into tungsten oxide;
directly after the roasting, leaching the roasted waste material for separating tungsten components from remaining components;
wherein the tungsten components are leached in an alcaline ammonia solution so that the tungsten oxide is selectively dissolved;
separating remaining solid components of the leached roasted waste material from the dissolved tungsten oxide.

2. The method according to claim 1, wherein the roasting of the waste material comprises or consists of roasting at a temperature in a range between 400⁰C and 1000^{o}C, particularly in a range between 500⁰C and 800⁰C

3. The method according to claim 1 or 2, further comprising leaching the waste material before the roasting so that selectively at least one auxiliary metal is dissolved.

4. The method according to any of claims 1 to 3, wherein the ammonia solution has an ammonia component in a range between 0.5 mass percentage and 25 mass percentage, particularly in a range between 2 mass percentage and 6 mass percentage.

5. The method according to any of claims 1 to 4, comprising one of the following alternatives:
the leaching directly after the roasting is the leaching of the tungsten components in the alcaline ammonia solution;
the leaching directly after the roasting differs from the leaching of the tungsten components in the alcaline ammonia solution and is performed so that selectively at least one auxiliary metal is dissolved.

6. The method according to any of claims 1 to 5, wherein a ratio between solid and liquid during leaching for selectively dissolving the tungsten oxide is in a range between 1/100 g/m! and 1/3 g/ml, particularly in a range between 1/15 g/ml and 1/5 g/ml.

7. The method according to any of claims 1 to 6, wherein a temperature during leaching for selectively dissolving the tungsten oxide is in a range between 20°C and 180°C, particularly in a range between 20°C and 70⁰C.

8. The method according to any of claims 1 to 7, wherein a duration of the leaching for selectively dissolving the tungsten oxide is in a range between 1 minute and 6 hours.

9. The method according to any of claims 1 to 8, further comprising comminuting the waste material before the roasting.

10. The method according to any of claims 1 to 9, further comprising purifying the separated dissolved tungsten oxide, particularly by ion exchange.

11. The method according to any of claims 1 to 10, further comprising evaporating liquid components of the separated dissolved tungsten oxide for crystallization.

12. The method according to claim 11, further comprising calcinating the crystallized material to thereby obtain tungsten oxide.

13. The method according to any of dams 1 to 12, further comprising recycling at least one further metal from the separated solid components.

14. The method according to claim 13, wherein the recycling of the at least one further metal comprises:
leaching, particularly acidic leaching, the separated solid components so that selectively the at least one further metal is dissolved; and
separating remaining solid components of the leached separated solid components from the dissolved at least one further metal.

15. The method according to any of claims 1 to 12, wherein the leaching directly after the roasting differs from the leaching of the tungsten components in the alcaline ammonia solution and is performed so that selectively at least one auxiliary metal is dissolved, further comprising recycling at least one further metal from a liquid solution in which the at least one auxiliary metal is dissolved.
